(19) Europäisches Patentamt
European Patent Office
Office européen des brevets

(11) **EP 4 778 906 A1**

(12) **EUROPEAN PATENT APPLICATION**
published in accordance with Art. 153(4) EPC

(43) Date of publication:
**22.07.2026 Bulletin 2026/30**

(21) Application number: **24865392.5**

(22) Date of filing: **09.09.2024**

(51) International Patent Classification (IPC):
**C04B 35/626** *(2006.01)*   **B01J 2/04** *(2006.01)*
**C04B 35/587** *(2006.01)*   **F16C 33/32** *(2006.01)*

(52) Cooperative Patent Classification (CPC):
**B01J 2/04; C04B 35/587; C04B 35/626;**
**F16C 33/32**

(86) International application number:
**PCT/JP2024/032150**

(87) International publication number:
**WO 2025/057892 (20.03.2025 Gazette 2025/12)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **15.09.2023 JP 2023149674**

(71) Applicant: **Niterra Materials Co., Ltd.**
**Yokohama-shi, Kanagawa 235-0032 (JP)**

(72) Inventors:
• **OOKUBO, Kazuya**
**Yokohama-shi, Kanagawa 235-0032 (JP)**
• **YAMAGUTI, Haruhiko**
**Yokohama-shi, Kanagawa 235-0032 (JP)**
• **FUNAKI, Kai**
**Yokohama-shi, Kanagawa 235-0032 (JP)**

(74) Representative: **Henkel & Partner mbB**
**Patentanwaltskanzlei, Rechtsanwaltskanzlei**
**Maximiliansplatz 21**
**80333 München (DE)**

(54) **METHOD FOR PRODUCING CERAMIC GRANULATED POWDER AND METHOD FOR PRODUCING CERAMIC SINTERED BODY**

(57)     A method for producing a ceramic granulated powder according to an embodiment comprises a first slurry preparation step, a first granulation step, a cyclone recovery step, a spray-dry recovery step, a first slurry preparation step, and a first granulation step. In the first slurry preparation step, a first slurry comprising a first mixture that contains a first powder is prepared. In the first granulation step, a first ceramic granulated powder containing the first mixture is produced by granulating the first slurry. In the cyclone recovery step, a cyclone reuse powder is acquired during or after the first granulation step. In the spray-dry recovery step, a spray-dry reuse powder is acquired after the first granulation step. In the second slurry preparation step, a second slurry comprising a second mixture obtained by mixing both reuse powders is prepared. In the second granulation step, a second ceramic granulated powder containing the second mixture is produced by granulating the second slurry.

EP 4 778 906 A1

START

ST1

BINDING AGENT
+ SOLVENT

NON-REUSED
POWDER P

→ FIRST SLURRY
PREPARING STEP
(FIRST MIXTURE)

FIRST SLURRY

ST2

FIRST GRANULATING
STEP

FIRST CERAMIC
GRANULATED POWDER

ST3

n-TH CYCLONE
COLLECTING STEP

CYCLONE REUSED
POWDER Pc

ST4

n-TH SPRAY-DRY
COLLECTING STEP

SPRAY-DRIED REUSED
POWDER Ps

BINDING AGENT + SOLVENT

ST5

n-TH SECOND SLURRY
PREPARING STEP
(SECOND MIXTURE)

n-TH SECOND SLURRY

ST6

n-TH SECOND
GRANULATING STEP

n-TH SECOND CERAMIC
GRANULATED POWDER

ST7

n=N?    NO

YES

END

FIG. 1

**Description**

**TECHNICAL FIELD**

An embodiment of the preset invention relates to a method of manufacturing a ceramic granulated powder and a method of manufacturing a ceramic sintered compact.

**BACKGROUND ART**

Ceramic sintered compacts are used in a variety of fields such as wear-resistant members and semiconductor device substrates. Examples of ceramic sintered compacts include a variety of sintered compacts such as a silicon nitride sintered compact, an aluminum nitride sintered compact, an aluminum oxide sintered compact, and a zirconium oxide sintered compact. For example, Japanese Patent No. 5944910 (Patent Document 1) discloses a silicon nitride sintered compact. The silicon nitride sintered compact described in Patent Document 1 is improved in wear resistance by controlling a composition or an area ratio of grain boundary phase.

In manufacturing a ceramic sintered compact, a ceramic powder, which serves as a matrix, and a sintering aid powder are mixed and granulated through a granulating step. In a ceramic granulated powder obtained through the granulating step, the ceramic powder, which serves as the matrix, and the sintering aid powder are uniformly mixed. The ceramic granulated powder is molded, debound, and sintered to obtain ceramic sintered compacts.

For example, Japanese Patent Laid-Open No. 2020-1968 (Patent Document 2) discloses a granulating step in which granulation is performed using a spray dryer. In Patent Document 2, a ceramic granulated powder obtained by the spray dryer and a ceramic powder obtained by a cyclone collector are mixed to obtain a ceramic granulated powder.

**PRIOR ART DOCUMENTS**

**PATENT DOCUMENT**

Patent Document 1: Japanese Patent No. 5944910
Patent Document 2: Japanese Patent Laid-Open No. 2020-1968

**SUMMARY OF THE INVENTION**

**PROBLEMS TO BE SOLVED BY THE INVENTION**

In Patent Document 2, the ceramic granulated powder mixed with the ceramic powder collected by the cyclone collector is used to improve the usage efficiency of the fed ceramic powder. Spray drying is a method in which powder is obtained by evaporating a solvent of a slurry. The obtained powder is in a spherical shape and has fluidity. The spherical ceramic granulated powder, which is excellent in moldability, is used for a step of manufacturing a ceramic sintered compact.

However, a spray dryer is a method of immediately drying a slurry. Some fed ceramic powder thus adheres to an inner wall of the spray dryer. The ceramic powder adhering to the inner wall has been collected through a cleaning step for the inside of the spray dryer. Therefore, the usage efficiency of the ceramic powder introduced into the spray dryer is not necessarily favorable.

An embodiment, which is intended to address such a problem, provides a method of manufacturing ceramic granulated powder and a method of manufacturing a ceramic sintered compact that enable an improved usage efficiency of ceramic powder introduced into a spray dryer.

**MEANS FOR SOLVING THE PROBLEMS**

A method of manufacturing ceramic granulated powder according to an embodiment includes steps for a first slurry preparing, a first granulating, a cyclone collecting, spray-dry collecting, a second slurry preparing, and a second granulating. The first slurry preparing step prepares a first slurry including a first mixture including, as a non-reused powder, at least a non-reused ceramic powder and a sintering aid powder. The first granulating step produces a first ceramic granulated powder including the first mixture by granulating the first slurry using a spray dryer. The cyclone collecting step obtains a cyclone reused powder using a cyclone collector in a middle of or after the first granulating step. The spray-dry collecting step obtains a spray-dried reused powder from the spray dryer after the first granulating step. The second slurry preparing step prepares a second slurry including a second mixture including at least a mixture of the cyclone reused powder and the spray-dried reused powder. The second granulating step produces a second ceramic granulated powder including the second mixture by granulating the second slurry using the spray dryer. Further, an average particle diameter of the cyclone reused powder is smaller than an average particle diameter of the ceramic granulated powder and smaller than an average particle diameter of the spray-dried reused powder. In the cyclone collecting step, reused powder may be collected using the cyclone collector during or after the second granulating step. In the spray-dry collecting step, reused powder may be collected from the spray dryer after the second granulating step.

## BRIEF DESCRIPTION OF THE DRAWINGS

[FIG. 1] FIG. 1 is a diagram illustrating a first flowchart for explaining an example of a method of manufacturing ceramic granulated powder according to an embodiment.

[FIG. 2] FIG. 2 is a diagram illustrating a second flowchart for explaining an example of the method of manufacturing ceramic granulated powder according to the embodiment.

[FIG. 3] FIG. 3 is a perspective external view schematically illustrating an example of a spray dryer for manufacturing a ceramic granulated powder according to the embodiment.

[FIG. 4] FIG. 4 is a perspective external view schematically illustrating an example of a cyclone collector for manufacturing the ceramic granulated powder according to the embodiment.

## DESCRIPTION OF EMBODIMENTS

Hereinafter, an embodiment of a method of manufacturing a ceramic granulated powder and a method of manufacturing a ceramic sintered compact will be described in detail with reference to the drawings.

A method of manufacturing ceramic granulated powder according to an embodiment includes steps for a first slurry preparing, a first granulating, a cyclone collecting, spray-dry collecting, a second slurry preparing, and a second granulating. The first slurry preparing step prepares a first slurry including a first mixture including, as a non-reused powder, at least a non-reused ceramic powder and a sintering aid powder. The first granulating step produces a first ceramic granulated powder including the first mixture by granulating the first slurry using a spray dryer. The cyclone collecting step obtains a powder (herein referred to as "cyclone reused powder") included in the gas sucked from the spray dryer using a cyclone collector in a middle of or after the first granulating step. The spray-dry collecting step obtains a powder (herein referred to as "spray-dried reused powder") adhering to the wall of the spray dryer from the spray dryer after the first granulating step. The second slurry preparing step prepares a second slurry including a second mixture including at least a mixture of the cyclone reused powder and the spray-dried reused powder. The second granulating step produces a second ceramic granulated powder including the second mixture by granulating the second slurry using the spray dryer. Further, an average particle diameter of the cyclone reused powder is smaller than an average particle diameter of the ceramic granulated powder and smaller than an average particle diameter of the spray-dried reused powder. In the cyclone collecting step, reused powder may be collected using the cyclone collector during or after the second granulating step. In the spray-dry collecting step, reused powder may be collected from the spray dryer after the second granulating step.

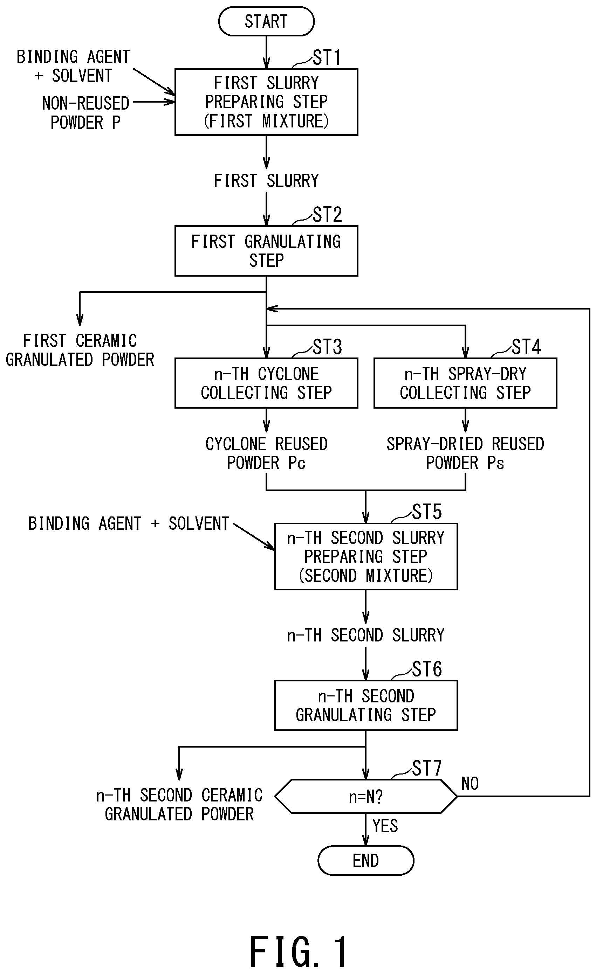

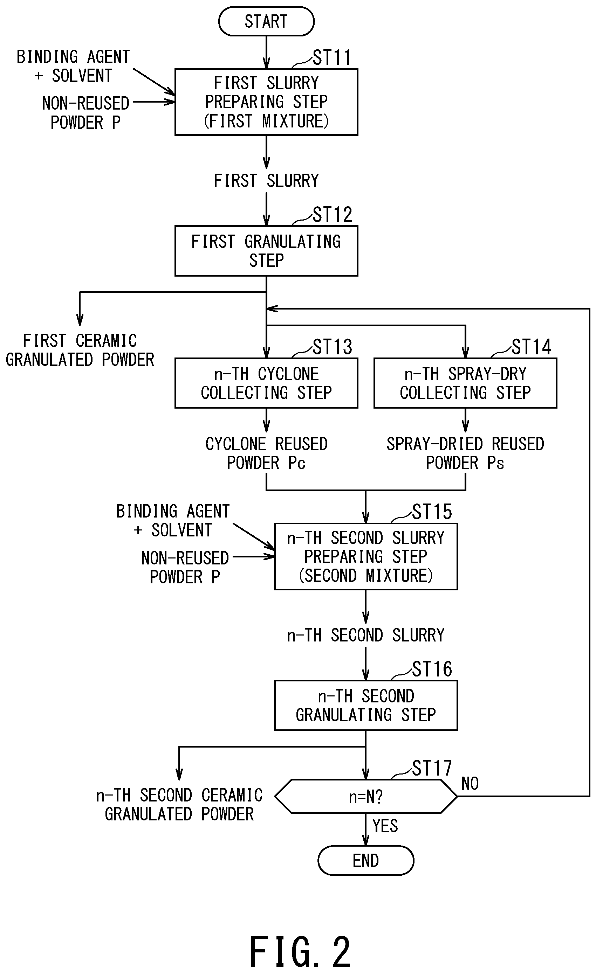

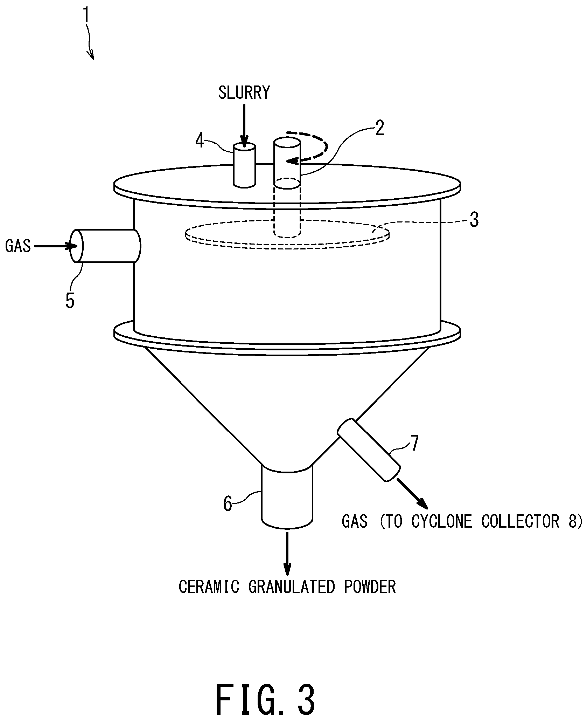

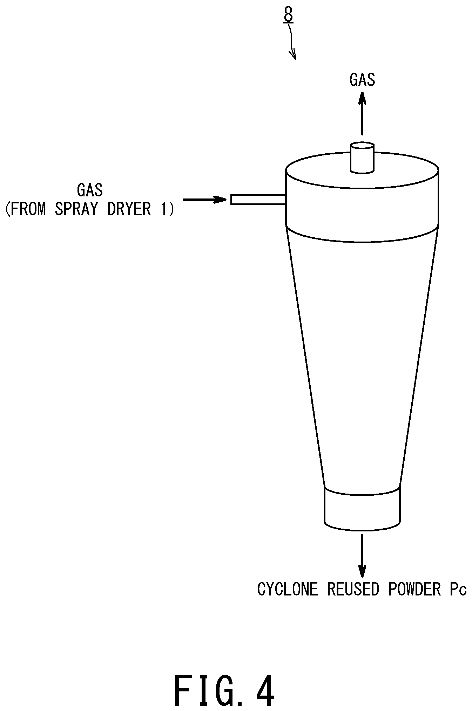

FIG. 1 and FIG. 2 illustrate flowcharts for explaining a method of manufacturing ceramic granulated powder. FIG. 3 illustrates an example of a spray dryer for manufacturing a ceramic granulated powder. FIG. 4 illustrates an example of a cyclone collector for manufacturing the ceramic granulated powder. In FIG. 3 and FIG. 4, a reference numeral 1 denotes a spray dryer, a reference numeral 2 denotes a rotation shaft of the spray dryer 1, a reference numeral 3 denotes a rotary disk, a reference numeral 4 denotes a raw material feed port, a reference numeral 5 denotes a gas feed port, a reference numeral 6 denotes a granulated powder collection port, a reference numeral 7 denotes a cyclone powder collection port, and a reference numeral 8 denotes a cyclone collector.

FIG. 1 is a flowchart including a reuse step (Steps ST3 to ST6) in which only a cyclone reused powder Pc and a spray-dried reused powder Ps are used without addition of a non-reused powder P (for example, unused powder). FIG. 2 is a flowchart including a reuse step (Steps ST13 to ST16) in which the non-reused powder P is added to the cyclone reused powder Pc and the spray-dried reused powder Ps. As seen from the above, at least the cyclone reused powder Pc and the spray-dried reused powder Ps are fed to perform the reuse step (Steps ST3 to ST6 and ST13 to ST16). It should be noted that a first mixture contains neither the cyclone reused powder Pc nor the spray-dried reused powder Ps.

Description will be made on the method of manufacturing ceramic granulated powder illustrated in FIG. 1 with reference to a first flowchart. The method of manufacturing ceramic granulated powder includes a repetition step corresponding to N (N is an integer of one or more), which is the number of times of reuse.

First, in a first slurry preparing step in Step ST1, a slurry is prepared, the slurry including a first mixture containing at least the non-reused powder P (a non-used ceramic powder and a sintering aid powder), for example, a first mixture containing a ceramic powder, a sintering aid powder, a binding agent, and a solvent. The ceramic powder refers to a ceramic powder that serves as a matrix. The matrix refers to a component contained in the largest amount in a ceramic sintered compact. Accordingly, in a case where a "ceramic powder (for example, yttria) is added as the sintering aid powder, the ceramic powder is considered as the sintering aid powder. For a silicon nitride sintered compact, the ceramic powder is a silicon nitride powder. For an aluminum nitride sintered compact, the ceramic powder is an aluminum nitride powder. For an aluminum oxide sintered compact, the ceramic powder is an aluminum oxide powder. For a zirconium oxide sintered compact, the ceramic powder is a zirconium oxide powder.

The sintering aid powder serves to improve sinterability of the ceramic sintered compact. Examples of the sintering aid include a rare earth compound, an alkaline earth compound, an aluminum compound, a titanium compound, a hafnium compound, a zirconium compound, a tungsten compound, and a molybdenum compound. Examples of the compounds include an oxide, a nitride, a silicide, and a carbide. In addition to the above, a known sintering aid may be used. An additive amount of the sintering aid powder is preferably in a range from 0.1 mass% to 30 mass%, where the total of the ceramic powder and the sintering aid powder is defined as 100 mass%.

The binding agent serves to improve moldability of a mixture of the ceramic powder and the sintering aid powder. The binding agent is sometimes referred to as binder. The binding agent is used to produce a ceramic granulated powder or a green compact. The binding agent, which preferably disappears during a debinding step and a sintering step, is preferably an organic binding agent. Moreover, the binding agent is preferably in a range from 2 parts by mass to 20 parts by mass, where the total of the ceramic powder and the sintering aid powder is defined as 100 parts by mass.

The solvent serves to form a mixture of the ceramic powder, the sintering aid powder, and the binding agent into a slurry. The solvent may be either aqueous or organic. Examples of the organic solvent include alcohols, ketones, aromatic hydrocarbons, and halogenated hydrocarbons. Examples of ketones include acetone, methyl ethyl ketone, and methyl isobutyl ketone. Examples of alcohols include ethanol, propanol, and butanol. Examples of aromatic hydrocarbons include benzene, toluene, and xylene. Examples of halogenated hydrocarbons include trichloroethylene, tetrachloroethylene, and bromochloromethane.

For a step of preparing the first mixture containing the ceramic powder, the sintering aid powder, the binding agent, and the solvent in the first slurry preparing step in Step ST1, a ball mill or a bead mill is usable. The order of mixing the ceramic powder, the sintering aid powder, the binding agent, and the solvent may be determined as desired. The ceramic powder, the sintering aid powder, the binding agent, and the solvent may be mixed at a time. The binding agent and the solvent may be added after the ceramic powder and the sintering aid are mixed. In a case where a plurality of sintering aids are used, the sintering aids may be mixed together and then mixed with the ceramic powder.

A mixing step in which the solvent is added is wet mixing. In a case where the bead mill or the ball mill is used, a material of beads or balls is preferably a ceramic. In a case where the bead mill or the ball mill is used, the material of the beads or the balls is more preferably one or two or more selected from a zirconium oxide sintered compact, an aluminum oxide sintered compact, and a silicon nitride sintered compact. As described above, any of zirconium oxide, aluminum oxide, and silicon nitride, which are addable as the sintering aid or a raw material, is less likely to have an adverse influence even if worn to mix into the slurry during the mixing step.

It is possible to obtain a first slurry through the first slurry preparing step.

Then, in a first granulating step in Step ST2, the first slurry prepared through the first slurry preparing step in Step ST1 is granulated using the spray dryer 1, thereby producing a first ceramic granulated powder containing the first mixture.

With reference of FIG. 3, description will be made on the first granulating step in Step ST2. The spray dryer 1 in FIG. 3 is, by way of example, a disk atomizer type. The spray dryer 1 is not limited to the disk atomizer type and may be a nozzle atomizer type. In the spray dryer 1, the rotary disk 3 is attached to the rotation shaft 2. A rotation of the rotation shaft 2 in a direction indicated by a dashed arrow causes the rotary disk 3 to rotate. With the rotary disk 3 rotating, a slurry (the first slurry or a second slurry) is fed into the spray dryer 1 through the raw material feed port 4. A warmed gas is also provided from the gas feed port 5.

When the slurry is dropped, the slurry strikes the rotating rotary disk 3, being dispersed in the form of droplets by the rotary disk 3. The dispersed droplets are immediately dried, forming into a ceramic granulated powder (the first ceramic granulated powder or a second ceramic granulated powder). The ceramic granulated powder falls downward inside the spray dryer 1. The ceramic granulated powder is taken out from the granulated powder collection port 6. The ceramic granulated powder is obtainable through this step.

A slurry powder not formed into the ceramic granulated powder by the spray dryer 1 (herein, referred to as "non-granulated powder") falls into the granulated powder collection port 6 or adheres onto an inner wall surface of the spray dryer 1. The non-granulated powder may also float, as powder, inside the spray dryer 1. Among the non-granulated powder, the non-granulated powder fallen into the granulated powder collection port 6 (herein, referred to as "fallen non-granulated powder") is separable through a step of collecting the ceramic granulated powder. For example, the fallen non-granulated powder is in a powdered form. Thus, since being different in particle diameter from the granulated powder, the fallen non-granulated powder is separable from the ceramic granulated powder by sieving.

Returning to the description of FIG. 1, in connection with the first granulating step, among the non-granulated powder, powder remaining inside the spray dryer 1 without falling into the granulated powder collection port 6 (herein, referred to as "reused powder") is collected in Steps ST3 and ST4. First, in the middle of or after the first granulating step in Step ST2, an inert gas inside the spray dryer 1 is drawn into the cyclone collector 8 in a cyclone collecting step in Step ST3, thereby obtaining the cyclone reused powder Pc for an n-th (n = 1, 2,...,N) reuse using the cyclone collector 8. The cyclone reused powder Pc is an example of the reused powder.

Referring to FIG. 4, the cyclone collector 8 separates the cyclone reused powder Pc by a centrifugal force based on a cyclone generated inside and collects the cyclone reused powder Pc from below. The cyclone collector 8 enables collecting, as the cyclone reused powder Pc, a part of the powder that would have adhered to the inner wall of the spray dryer 1 illustrated in FIG. 3 and the powder floating inside the spray dryer 1. The cyclone reused powder Pc can be collected by the cyclone collector 8 as being drawn into the cyclone collector 8 through the cyclone powder collection port 7. It should be noted that a bag filter (illustration omitted) that draws gas from the cyclone collector 8 to collect superfine particles that fail to be collected even by the cyclone collector 8 may be installed.

Returning to the description of FIG. 1, after the first granulating step in Step ST2, the spray-dried reused powder Ps for an n-th reuse is obtained through a spray-dry collecting step in Step ST4, the spray-dried reused powder Ps adhering to the wall surface (mainly, the inner wall surface) of the spray dryer 1 in the first granulating step in Step ST2. The spray-dried reused powder Ps is an example of the reused powder. When collection is performed by the cyclone collector 8 alone, it is difficult to collect the powder adhering to the wall surface of the spray dryer 1. Accordingly, a jig is used to strip the powder adhering to the wall surface. It is preferable that the jig used for a step of stripping the spray-dried reused powder Ps adhering to the wall surface be made of a resin. The resin is preferably acrylic, polycarbonate, ABS (Acrylonitrile, Butadiene, Styrene), or the like. Examples of the jig is a spatula. A resin spatula makes it possible to collect the spray-dried reused powder Ps without scraping the wall surface of the spray dryer 1. If the wall surface of the spray dryer 1 is scraped, it will partly mix, as impurities, into the spray-dried reused powder Ps. In other words, the resin spatula makes it possible to reduce mixing of impurities originating from the spray dryer 1 into the spray-dried reused powder Ps.

It should be noted that the step of stripping the spray-dried reused powder Ps on the wall surface of the spray dryer 1 using the resin spatula may be manually performed by a person who grasps the resin spatula or may be mechanically performed by a stripping device equipped with the resin spatula.

Then, in a second slurry preparing step in Step ST5, the second slurry for an n-th reuse is prepared, the second slurry including a second mixture in which the cyclone reused powder Pc and the spray-dried reused powder Ps are mixed. Then, in a second granulating step in Step ST6, the n-th second slurry prepared using the spray dryer 1 through the second slurry preparing step in Step ST5 is granulated, thereby producing an n-th second granulated powder containing the second mixture.

Here, the second mixture illustrated in FIG. 1 is a mixture of only the cyclone reused powder Pc and the spray-dried reused powder Ps without being mixed with the non-reused powder P. Alternatively, the second mixture may be a mixture provided by adding the non-reused powder P to the cyclone reused powder Pc and the spray-dried reused powder Ps as described later with reference of FIG. 2.

A slurry preparation method in the second slurry preparing step in Step ST5 is the same as that in the first slurry preparing step in Step ST1. In the second slurry preparing step, the second mixture is first mixed using a ball mill or a bead mill. The second mixture has been added with non-reused binding agent and solvent, if necessary. It is possible to obtain the second slurry by adding a solvent to the second mixture and wet-mixing it.

In the second granulating step in Step ST6, the second slurry prepared through the second slurry preparing step is granulated using the spray dryer, thereby producing a granulated powder containing the second mixture for an n-th reuse. A granulation method in the second granulating step in Step ST6 is the same as that in the first granulating step in Step ST2.

In Step ST7, it is determined whether or not "n" in the n-th second slurry preparing step and the n-th second granulating step reaches "N" in the N times, which is the set number of times of reuse, (n = N). In a case where the result of the determination in Step ST7 is NO, that is, in a case where "n" does not reach "N" (n < N), the reused powders Pc and Ps remaining in the spray dryer 1 are collected for the n-th second granulating step in Steps ST3 and ST4.

In comparison, in a case where the result of the determination in Step ST7 is YES, that is, "n" reaches "N" (n = N), the reused powders Pc and Ps remaining in the spray dryer 1 are collected and the reuse step is terminated. The set number of times of reuse (N times) may be determined in accordance with the amount of the obtained second slurry or the like. For example, in a case where the yield of the first ceramic granulated powder is high, the set number of times of reuse is reduced.

Subsequently, description will be made on a method of manufacturing ceramic granulated powder illustrated in FIG. 2 with use of a second flowchart. The method of manufacturing ceramic granulated powder includes a repetition step corresponding to the N times of reuse. It should be noted that Steps ST11 to ST14 illustrated in FIG. 2 are similar to Steps ST1 to ST4 illustrated in FIG. 1 and, accordingly, the description thereof is omitted.

In a second slurry preparing step in Step ST15, the second slurry for an n-th (n = 1, 2,..., N) reuse is prepared, the second slurry including a second mixture in which the cyclone reused powder Pc and the spray-dried reused powder Ps are mixed with the non-reused powder P. The second mixture has been added with non-reused binding agent and solvent, if necessary. That is to say, in Step ST15, the first slurry may be mixed with the cyclone reused powder Pc and the spray-dried reused powder Ps. Then, in a second granulating step in Step ST16, the n-th second slurry prepared using the spray dryer 1 through the second slurry preparing step in Step ST15 is granulated, thereby producing an n-th second granulated powder containing the second mixture.

A slurry preparation method in the second slurry preparing step in Step ST15 is the same as that in the first slurry preparing step in Step ST11 except a content of the second mixture. A granulation method in the second granulating step in Step ST16 is the same as that in the first granulating step in Step ST12 except a content of the second slurry.

In Step ST17, it is determined whether or not "n" in the n-th second slurry preparing step and the n-th second granulating step reaches "N" in the N times, which is the set number of times of reuse, (n = N) as in Step ST7. In a case where the result of the determination in Step ST17 is NO, that is, in a case where "n" does not reach "N" (n < N), the reused powders Pc and Ps remaining in the spray dryer 1 are collected for the n-th second granulating step in Steps ST13 and ST14.

In comparison, in a case where the result of the determination in Step ST17 is YES, that is, "n" reaches "N" (n = N), the reused powders Pc and Ps remaining in the spray dryer 1 are collected and the reuse step is terminated. The method in FIG. 2, which uses the n-th reused powders Pc and Ps, makes it possible to enhance the usage efficiency of the raw powder. In other words, it is possible to reduce the amount of the raw powder to be discarded.

Here, an average particle diameter B of the cyclone reused powders P obtained through the flowcharts in FIG. 1 and FIG. 2 is smaller than an average particle diameter A of the ceramic granulated powder (the first ceramic granulated powder and the second ceramic granulated powder) obtained through the first granulating step (Expression (1) below) and smaller than an average particle diameter C of the spray-dried reused powder Ps obtained through the spray-dry collecting step in Step ST4 (Expression (2) below).

$$B < A \quad ...(1)$$

$$B < C \quad ...(2)$$

Further, it is preferable that the average particle diameter A of the ceramic granulated powder be smaller than the average particle diameter C of the spray-dried reused powder Ps (Expression (3) below).

$$A < C \quad ...(3)$$

That is to say, it is possible to obtain a greater effect by satisfying Expression (4) below. For an average particle diameter of powder, 100 particles of each collected powder are observed under an SEM and the average value of particle diameters of them is taken as an average particle diameter. A particle diameter is the longest diagonal in one particle. The average particle diameter of powder is measured by a dry method.

$$B < A < C \quad ...(4)$$

Here, the ceramic granulated powder, the cyclone reused powder Pc, and the spray-dried reused powder Ps, which are added with a binder (for example, an organic binder), are not easily destroyable. Moreover, the particle diameter of powder is measurable by a dry method.

The average particle diameter A of the ceramic granulated powder is preferably equal to or more than 50 $\mu$m and less than 150 $\mu$m. As long as the average particle diameter A of the ceramic granulated powder falls within the above range, manufacturing efficiency of the ceramic green compact is improved. The average particle diameter B of the cyclone reused powder Pc is preferably in a range from 1 $\mu$m to 20 $\mu$m. The cyclone reused powder Pc is collected by the cyclone collector 8. With a large particle diameter, it may be difficult to collect the cyclone reused powder Pc. Accordingly, the average particle diameter of the cyclone reused powder Pc is preferably in a range from 1 $\mu$m to 20 $\mu$m, further, in a range from 3 $\mu$m to 18 $\mu$m.

The average particle diameter C of the spray-dried reused powder Ps is preferably 150 $\mu$m or more. The spray-dried reused powder Ps is powder adhering to the wall surface of the spray dryer 1. The spray-dried reused powder Ps is collected after accumulating until the average particle diameter C of the spray-dried reused powder Ps reaches 150 $\mu$m or more, approximately, which improves collection efficiency. It should be noted that an upper limit of the average particle diameter C of the spray-dried reused powder Ps is not particularly limited but preferably 800 $\mu$m or less. With a large average particle diameter C of the spray-dried reused powder Ps exceeding 800 $\mu$m, the manufacturing efficiency of the ceramic granulated powder inside the spray dryer 1 may be lowered.

The cyclone reused powder Pc is powder collected using an airflow of a cyclone. Due to the use of the airflow, the cyclone reused powder Pc is relatively small and light powder. Thus, the cyclone reused powder Pc satisfies Expression (1) above in relation to another powder. The spray-dried reused powder Ps is powder adhering to the wall surface of the spray dryer 1 as the non-granulated powder without forming into the ceramic granulated powder. It may happen in a case where droplets of the first slurry are insufficiently dried. It may also happen in a case where the droplets are large in size and, consequently, strike the inner wall surface due to a large centrifugal force when dispersed from the rotary disk 3, or the like. The spray-dried reused powder Ps is thus relatively large and heavy powder. Thus, the spray-dried reused powder Ps satisfies Expressions (2) and (3) above in relation to the other powders.

In the methods of manufacturing ceramic granulated powder illustrated in FIG. 1 and FIG. 2, both the reused powders Pc and Ps are used as the second mixture. That is to say, both the reused powders Pc and Ps are reused, which makes it possible to improve the usage efficiency of the ceramic powder. Moreover, the second granulating step is performed using the second slurry. In preparing the second slurry, the reused powders Pc and Ps satisfying Expressions (1) and (2) above are reused.

At least the cyclone reused powder Pc, which is a small powder, and the spray-dried reused powder Ps, which is a large powder, are mixed to form the second mixture, which facilitates preparation of a uniformly mixed slurry in the second slurry preparing step (Steps ST5 and ST15). Moreover, wet mixing is applied to prepare the second slurry, which facilitates more uniform mixing. The reason for the above is as follows. The reused powders Pc and Ps are dried inside the spray dryer 1, which results in a difference in surface state between the undried reused powders Pc and Ps and the dried reused powders Pc and Ps. Accordingly, the second slurry is prepared from the dried reused powders Pc and Ps, which reduces an influence of the difference in surface state from the undried reused powders Pc and Ps.

The reused powders Pc and Ps, which have predetermined particle diameters, are likely to be loosened when formed into slurry. Accordingly, although the second granulating step may be performed using only the reused powders Pc and Ps without addition of the non-reused powder P (illustrated in FIG. 1), it is favorable that the non-reused powder P be added to the reused powders Pc and Ps to perform the second granulating step (illustrated in FIG. 2).

It is preferable that the first mixture be added to perform the second granulating step as illustrated in FIG. 2. As described above, the reused powders Pc and Ps are different in surface state from undried ones. Moreover, there is a possibility that impurities mix during the step of collecting the reused powders Pc and Ps. The non-reused powder P is added to the cyclone reused powder Pc and the spray-dried reused powder Ps to perform the second granulating step, which makes it possible to reduce influences of the difference in surface state of the reused powders Pc and Ps and mixing of impurities. Moreover, it is preferable that the ball mill be used for the second granulating step. By using the ball mill, it is possible to perform the mixing step inside the ball mill. This makes it possible to prevent impurities from mixing from another step.

In the method of manufacturing ceramic granulated powder, it is not essential to produce the second mixture by mixing the non-reused powder P as illustrated in FIG. 2 and the second mixture may be produced without mixing the non-reused powder P as illustrated in FIG. 1. However, it is favorable that the second mixture be produced by mixing the non-reused powder P as illustrated in FIG. 2. Further, in FIG. 2, it is favorable that the second mixture be produced by mixing the non-reused powder P at a certain mass ratio (for example, Expressions (5) and (6) below).

In the flowchart illustrated in FIG. 2, MP denotes the mass of the non-reused powder P (the total of the non-reused ceramic powder and the sintering aid powder) to be mixed in the second mixture, MPc denotes the mass of the cyclone reused powder Pc (the total of the ceramic powder and the sintering aid powder), and MPs denotes the mass of the spray-dried reused powder Ps (the total of the ceramic powder and the sintering aid powder). It is preferable that the reused powders Pc and Ps (the cyclone reused powder Pc + spray-dried reused powder Ps) to be mixed in the second mixture satisfy, in mass ratio, Expression (5) below.

$$[(\mathrm{MPc} + \mathrm{MPs}) \,/\, (\mathrm{MP} + \mathrm{MPc} + \mathrm{MPs})] \times 100 \leq 20 \ ...(5)$$

This indicates that it is preferable that a mass ratio of the reused powders Pc and Ps be equal to or less than 20 mass%, where the total of the non-reused powder P, the reused powder Pc, and the reused powder Ps, which are to be mixed in the second mixture, is defined as 100 mass%. As long as the mass ratio of the reused powders Pc and Ps is equal to or less than 20 mass%, it is possible to further reduce influences of the difference in surface state of the reused powders Pc and Ps and mixing of impurities. A lower limit value of the mass ratio of the reused powders Pc and Ps is not particularly limited but preferably equal to or more than 1 mass%.

In comparison, with reference to the non-reused powder P, it is preferable that the non-reused powder P to be mixed in the second mixture satisfy, in mass ratio, Expression (6) below.

$$80 \leq [\mathrm{MP} \,/\, (\mathrm{MP} + \mathrm{MPc} + \mathrm{MPs})] \times 100 \ ...(6)$$

When the n-th second granulating step is performed, the cyclone reused powder Pc and the spray-dried reused powder Ps are newly generated. The cyclone reused powder Pc and spray-dried reused powder Ps newly generated during the n-th second granulating step are reusable for the (n + 1)-th second granulating step.

The cyclone reused powder Pc and the spray-dried reused powder Ps newly generated during the n-th second granulating step are formed into the (n + 1)-th second slurry through a step similar to that for the n-th second slurry. The (n + 1)-th second slurry is usable to perform the (n + 1)-th second granulating step using the spray dryer 1 as the n-th second slurry. The reuse step of the reused powders Pc and Ps is performed for N times, which makes it possible to further improve the usage efficiency of the ceramic powder.

An upper limit of the number of times of generation of the second mixture using the reused powders Pc and Ps, that is, the number of times of reuse (N times) of the reused powders Pc and Ps is not particularly limited but is preferably equal to or less than 150 times. In a case where the number of times of reuse of the reused powders Pc and Ps exceeds 150 times, influences of the difference in surface state of the reused powders Pc and Ps, impurities, and the like may increase. Accordingly, it is preferable that the number of times (N times) of reuse of the reused powders Pc and Ps be equal to or less than 150 times, further, equal to or less than 50 times. Moreover, the mass ratio of the non-reused powder P satisfies Expression (6) above, which makes it possible to reduce an adverse influence of reuse of the reused powders Pc and Ps.

In the granulating step (Steps ST2, ST6, ST12, and ST16) using the spray dryer 1, an unneeded solvent may be collected. The collected solvent may be used as a solvent for producing the second slurry. For example, in circulating an inert gas inside the spray dryer 1, it is possible to collect the solvent by cooling the inert gas. Since the spray dryer 1 enables immediate drying, the solvent contained in the slurry evaporates, mixing into the gas inside the spray dryer 1. It is possible to collect the solvent by cooling the inert gas during circulation thereof. The solvent may be water-cooled, air-cooled, or the like. Reuse of the solvent makes it possible to further improve the usage efficiency of the solvent. In particular, in a case where an organic solvent is used, reuse of the solvent is significantly effective in terms of environment and costs.

In circulating the inert gas inside the spray dryer 1, it is preferable that a bag filter (illustration omitted), which draws the gas from the cyclone collector 8 and treats it, be installed if there is a concern that the ceramic powder and the sintering aid powder are mixed in. The solvent is collected from the gas, from which the ceramic powder and sintering aid powder are removed, through the bag filter, which enables optimizing the amount of the solvent to be reused.

In a case where an organic solvent is reused as the solvent, it is preferable that the organic solvent be dehydrated in advance using an azeotrope, a drying agent, or the like. It is more preferable that the drying agent be used. It is preferable that the drying agent be zeolite or silica gel. It is further preferable that the drying agent be a molecular sieve. The molecular sieve refers to a crystalline zeolite. In a case where the azeotrope is used, heating is needed, which may increase costs. In contrast, in a case where the drying agent is used, a dehydration performance is considerably high and an efficient dehydration is possible. The molecular sieve is also preferable in terms of the molecular sieve being reusable when dried by heating.

It is preferable that the gas to be introduced into the spray dryer 1 be an inert gas. The inert gas is exemplified by nitrogen gas or argon gas. The inert gas enables reduced reactions with the ceramic powder and the sintering aid powder. Moreover, the inert gas enables a reduced reaction with the solvent, which facilitates collection of the solvent from the gas inside the spray dryer 1. The spray dryer 1 and the cyclone collector 8 constitute a closed cycle system in which the inert gas is circulated for use. According to the method of manufacturing ceramic granulated powder as described above, it is possible to reuse the ceramic powder and, consequently, improve the usage efficiency of the ceramic powder. Moreover, it is also possible to collect and reuse the solvent.

A variety of substances are usable as the ceramic powder serving as the matrix. The ceramic powder is exemplified by one selected from a silicon nitride powder, an aluminum nitride powder, an aluminum oxide powder, and a zirconium oxide powder. In particular, a silicon nitride powder is preferably usable. Among the above, a silicon nitride powder is relatively expensive. Moreover, two or more sintering aids are often used for a silicon nitride sintered compact. A silicon nitride sintered compact is a ceramic sintered compact that is most likely to provide a cost reduction effect resulting from an improvement in usage efficiency of a non-reused raw powder.

The ceramic granulated powder (the first ceramic granulated powder and the second ceramic granulated powder) obtained through the granulating step (Steps ST2, ST6, ST12, and ST16) using the spray dryer 1 is usable for the method of manufacturing a ceramic sintered compact. The method of manufacturing a ceramic sintered compact according to the embodiment includes: a molding step of producing a green compact using the ceramic granulated powder obtained through the granulating step (Steps ST2, ST6, ST12, and ST16); a debinding step of producing a debound body by debinding the obtained green compact; and a sintering step of producing a ceramic sintered compact by sintering the obtained debound body.

First, the molding step of producing a green compact using the ceramic granulated powder obtained through the granulating step (Steps ST2, ST6, ST12, and ST16) is performed. A variety of methods such as die pressing, tumbling granulation, doctor blade method, and injection molding are applicable to the molding step. For example, to produce a spherical ceramic sintered compact for a bearing ball, die pressing or tumbling granulation is used.

The green compact obtained through the molding step may be subjected to a CIP (Cold Isostatic Pressing) treatment, if necessary. The CIP treatment may be wet-CIP or dry-CIP. Moreover, the green compact may be subjected to a drying step, if necessary.

Then, a debound body is obtained by performing the debinding step of debinding the obtained green compact. The debinding step is a step for removing the added binding agent. It is preferable that either a continuous furnace or a batch furnace be used for the debinding step. The debinding step may be performed with the green compact placed in a sleeve, if necessary. It is preferable that a maintained temperature during the debinding step be in a range from 400 degrees C to 600 degrees C. At a debinding temperature of less than 400 degrees C, there is a possibility that debinding fails to be sufficiently performed. In contrast, at a high debinding temperature exceeding 600 degrees C, there is a possibility that uneven debinding is likely to occur. Moreover, at an extremely high debinding temperature, there is a possibility that sintering begins before the binding agent is removed. Examples of an atmosphere during the debinding step include air and an inert gas.

Then, a ceramic sintered compact is obtained by performing the sintering step of sintering the obtained debound body. It is preferable that the sintering step be performed at a temperature in a range from 1500 degrees C to 2000 degrees C. Either pressureless sintering or pressure sintering may be performed. Examples of a sintering atmosphere include a non-oxidizing atmosphere, air, and vacuum. It is preferable that the non-oxidizing atmosphere be a nitrogen gas atmosphere or a reducing atmosphere containing nitrogen gas. A pressure inside a firing furnace may be a pressurized atmosphere. It is preferable that a sintering time fall within a range from 3 hours to 12 hours.

For example, for a silicon nitride sintered compact, a sintering temperature exceeding 2000 degrees C may result in decomposition of silicon nitride into Si and $N_2$. After the above-described sintering step, the sintered compact may be subjected to an HIP (Hot Isostatic Press) treatment, if necessary. Conditions for the HIP treatment are preferably as follows: the temperature is 1500 degrees C or higher and a pressure equal to or more than 10 MPa is applied. The sintered compact is subjected to the HIP treatment, which makes it possible to eliminate almost all the pores within the ceramic sintered compact.

It is possible to manufacture the ceramic sintered compact through the above steps. Moreover, the sintered compact is polished, if necessary.

For example, finish machining for forming a bearing ball achieves a surface roughness Ra of 0.1 $\mu$m or less. ASTM_F2094 specifies the surface roughness Ra in accordance with a grade of a bearing ball. The largest Ra is 0.013 $\mu$m. To form the ceramic sintered compact into a bearing ball, polishing to achieve, in Ra, 0.013 $\mu$m or less is necessary. Such polishing is referred to finish machining. It should be noted that ASTM standards are standards established by the American Society for Testing and Materials (ASTM International).

(Examples)

(Examples 1 to 5, Comparative Examples 1 to 4)

The first mixture containing a ceramic powder serving as a matrix was produced. For example, Table 1 lists first mixtures that are combinations of the ceramic powder serving as a matrix, a sintering aid powder, a binding agent, and a solvent. The total of the ceramic powder serving as the matrix and the sintering aid powder is expressed as 100 mass%. An additive amount of the binding agent was set within a range from 2 parts by mass to 20 parts by mass, where the total of the ceramic powder and the sintering aid powder was defined as 100 parts by mass.

[Table 1]

| | | First Mixture | | | |
| --- | --- | --- | --- | --- | --- |
| | | Non-Reused Powder P | | Binding Agent | Solvent |
| | | Ceramic Powder [mass%] | Sintering Aid Powder [mass%] | | |
| | Sample 1 | $Si_3N_4$ (90) | $Y_2O_3$ (5)<br>$Al_2O_3$ (4)<br>$TiO_2$ (1) | Organic Binder | Organic Solvent |
| | Sample 2 | $Si_3N_4$ (89) | $Y2O_3$ (4)<br>$Al_2O_3$ (3)<br>AlN (2)<br>$HfO_2$ (1)<br>$TiO_2$ (1) | Organic Binder | Organic Solvent |

(continued)

| | First Mixture | | | |
| | Non-Reused Powder P | | Binding Agent | Solvent |
| | Ceramic Powder [mass%] | Sintering Aid Powder [mass%] | | |
|---|---|---|---|---|
| Sample 3 | Si$_3$N$_4$ (87) | Y$_2$O$_3$ (6)<br>Al$_2$O$_3$ (3)<br>AlN (3)<br>Mo$_2$C (1) | Organic Binder | Organic Solvent |
| Sample 4 | Al$_2$O$_3$ (95) | Y$_2$O$_3$ (5) | Organic Binder | Organic Solvent |

Using the first mixture, the first slurry preparing step was performed using a ball mill or a bead mill. Beads or balls made of aluminum oxide sintered compacts or silicon nitride sintered compacts were used as the beads of the bead mill or the balls of the ball mill. Then, the first slurry was granulated using the spray dryer 1, thereby performing the first granulating step of producing a granulated powder containing the first mixture.

A step of obtaining the cyclone reused powder Pc by drawing an inert gas inside the spray dryer 1 into the cyclone collector 8 was performed after the first granulating step, and a step of obtaining the spray-dried reused powder Ps adhering to the wall surface of the spray dryer 1 was performed after the first granulating step. A resin spatula was used to collect the powder adhering to the inner wall of the spray dryer 1.

It was confirmed whether or not relationships between the average particle diameter A of the first ceramic granulated powder, the average particle diameter B of the cyclone reused powder Pc, and the average particle diameter C of the spray-dried reused powder Ps satisfied Expressions (1) to (3) above. Table 2 shows the results.

[Table 2]

| First Mixture | B<A (Exp (1)) | B<C (Exp (2)) | B<C (Exp (3)) |
|---|---|---|---|
| Sample 1 | Satisfied | Satisfied | Satisfied |
| Sample 2 | Satisfied | Satisfied | Satisfied |
| Sample 3 | Satisfied | Satisfied | Satisfied |
| Sample 4 | Satisfied | Satisfied | Satisfied |

As can be seen from Table 2, Samples 1 to 4 satisfied Expressions (1) and (2) above. Samples 1 to 4 also satisfied Expression (3) above. The average particle diameter A of the first granulated powder was in a range from 50 μm to 150 μm. The average particle diameter B of the cyclone reused powder Pc was in a range from 1 μm to 20 μm. The average particle diameter C of the spray-dried reused powder Ps was in a range from 150 μm to 800 μm.

Then, cases where at least both the cyclone reused powder Pc and the spray-dried reused powder Ps were reused once (N = 1) to produce the second mixture were defined as Examples 1 to 5. Cases where no second mixture was produced were defined as Comparative Examples 1 and 2. Cases where one of the cyclone reused powder Pc and the spray-dried reused powder Ps was reused once (N = 1) to produce the second mixture were defined as Comparative Examples 3 and 4. Table 3 shows contents of these cases.

[Table 3]

| | First Mixture |
|---|---|
| Example 1 | Sample 1 |
| Example 2 | Sample 2 |
| Example 3 | Sample 3 |
| Example 4 | Sample 4 |
| Example 5 | Sample 1 |
| Comparative Example 1 | Sample 1 |
| Comparative Example 2 | Sample 4 |
| Comparative Example 3 | Sample 1 |

(continued)

|  | First Mixture |
| --- | --- |
| Comparative Example 4 | Sample 1 |

| | First Mixture | | | |
| --- | --- | --- | --- | --- |
| | Type of Reused Powder | Mass Ratio Non-reused Powder P [mass%] | Binding Agent | Solvent |
| Example 1 | Reused Powder Pc,Ps | 80 | Organic Binder | Organic Solvent |
| Example 2 | Reused Powder Pc,Ps | 90 | Organic Binder | Organic Solvent |
| Example 3 | Reused Powder Pc,Ps | 98 | Organic Binder | Organic Solvent |
| Example 4 | Reused Powder Pc,Ps | 80 | Organic Binder | Organic Solvent |
| Example 5 | Reused Powder Pc,Ps | 50 | Organic Binder | Organic Solvent |
| Comparative Example 1 | None | None | None | None |
| Comparative Example 2 | None | None | None | None |
| Comparative Example 3 | Only Cyclone Reused powder Pc | 80 | Organic Binder | Organic Solvent |
| Comparative Example 4 | Only spray-dried reused powder Ps | 80 | Organic Binder | Organic Solvent |

Examples 1 to 3, Example 5, Comparative Example 1, Comparative Examples 3 and 4 each correspond to the second mixture containing the reused powders Pc and Ps for producing a silicon nitride sintered compact. Example 4 and Comparative Example 2 each correspond to the second mixture containing the reused powders Pc and Ps for producing an aluminum oxide sintered compact.

For example, "reused powders Pc and Ps" is listed for Example 1 in a column labeled "Type of Reused Powders Pc and Ps." This means that the cyclone reused powder Pc and the spray-dried reused powder Ps obtained after the first ceramic granulated powder was produced from Sample 1 using the spray dryer 1 were used. Moreover, "80" is listed for Example 1 in "Mass Ratio of Non-reused Powder P [mass%]" means that the non-reused powder P of Sample 1 was added in an amount of 80 mass% to the cyclone reused powder Pc and the spray-dried reused powder Ps collected from Sample 1. For each of Examples 2 to 5, the mass ratio of the non-reused powder P likewise obtained is listed.

In Comparative Example 1, neither of the reused powders Pc and Ps collected from Sample 1, which was the non-reused powder P, was reused. In Comparative Example 2, neither of the reused powders Pc and Ps collected from Sample 4, which was the non-reused powder P, was reused. In Comparative Example 3, out of the reused powders Pc and Ps collected from Sample 1, which was the non-reused powder P, only the cyclone reused powder Pc was reused as the second mixture and Sample 1 was added in an amount of 80 mass% to the cyclone reused powder Pc. In Comparative Example 4, out of the reused powders Pc and Ps collected from Sample 1, which was the non-reused powder P, only the spray-dried reused powder Ps was reused as the second mixture and Sample 1 was added in an amount of 80 mass% to the spray-dried reused powder Ps.

A step of preparing the second slurry was performed using the second mixture obtained by a single reuse as shown in Examples 1 to 5 and Comparative Examples 3 and 4 in Table 3. The solvent was also added during the second slurry preparing step. The second slurry preparing step was performed using a ball mill or a bead mill. Beads or balls made of aluminum oxide sintered compacts or silicon nitride sintered compacts were used as the beads of the bead mill or the balls of the ball mill.

Then, in Examples 1 to 5 and Comparative Examples 3 and 4, the second granulating step of granulating the second slurry using the spray dryer 1 to produce the second granulated powder containing the second mixture was performed.

It should be noted that a gas to be introduced into the spray dryer 1 during the first granulating step and the second granulating step was an inert gas. Moreover, during at least one of the first granulating step and the second granulating step, the organic solvent was collected.

In Examples 1 to 5 and Comparative Examples 3 and 4, the second ceramic granulated powder was obtained through the single reuse step described above. A ceramic sintered compact was produced using the obtained second ceramic granulated powder. It should be noted that in Comparative Examples 1 to 2 in Table 3, reusing was not performed and, accordingly, a ceramic sintered compact was produced using the first ceramic granulated powder produced using the first mixture. Specifically, using the second ceramic granulated powder according to Examples 1 to 5 and Comparative Examples 3 and 4 and the first ceramic granulated powder according to Comparative Examples 1 to 2, a green compact was produced by die pressing. The obtained green compact was subjected to the debinding step, thereby obtaining a debound body. The debinding step was performed at a temperature in a range from 400 degrees C to 600 degrees C. The obtained debound body was subjected to the sintering step. The sintering step was performed at a temperature in a range from 1500 degrees C to 2000 degrees C. An obtained sintered compact was subjected to the HIP treatment. An obtained ceramic sintered compact is a spherical ceramic sintered compact for use as a bearing ball.

The ceramic sintered compact was manufactured from the first ceramic granulated powder or the second ceramic granulated powder for a single reuse by the method of manufacturing a ceramic sintered compact described above. The appearance defect rate [%] and impurity amount increase rate [%] of the obtained ceramic sintered compact were measured. For the appearance defect rate, 1000 of ceramic sintered compacts according to each of Examples and Comparative Examples were selected as represented by Expression (7) below. Table 4 shows a rate of occurrence of appearance defects.

$$\text{Appearance defect rate [\%]} = (\text{the number of ceramic sintered compacts with appearance defects} / 1000) \times 100 \tag{7}$$

As for appearance defects, a ceramic sintered compact with a color-uneven area of 10% or more was considered as defective.

The impurity amount increase rate is a percentage based on the amount of impurities of Comparative Example 1 in a case where the ceramic sintered compact is a silicon nitride sintered compact, whereas being a percentage based on the amount of impurities of Comparative Example 2 in a case where the ceramic sintered compact is an aluminum oxide sintered compact. A sintered compact with an impurity amount increase rate in a range from 0 mass% to 5 mass% was considered as a best-quality product (A), a sintered compact with an impurity amount increase rate of more than 5 mass% and equal to or less than 10 mass% was considered as a good-quality product (B), and a sintered compact with an impurity amount increase rate of more than 10 mass% was considered as a medium-quality product (C). Table 4 shows the evaluation results. It should be noted that an SEM-EDS was used to measure the amount of impurities.

[Table 4]

|  | Appearance Defect Rate [%] | Evaluation of Impurity Amount Increase Rate |
|---|---|---|
| Example 1 | 2.8 | A |
| Example 2 | 2.6 | A |
| Example 3 | 2.5 | A |
| Example 4 | 2.6 | A |
| Example 5 | 3.9 | B |
| Comparative Example 1 | 2.5 | - |
| Comparative Example 2 | 2.1 | - |
| Comparative Example 3 | 5.6 | A |
| Comparative Example 4 | 7.2 | A |

As can be seen from Table 4, it has been demonstrated that the appearance defect rates and impurity amount increase rates of the ceramic sintered compacts according to Examples 1 to 5 are reduced to a level comparable to those of the ceramic sintered compacts according to Comparative Examples 1 and 2 and sufficiently low. In particular, the ceramic sintered compacts according to Examples 1 to 4, which satisfied Expression (6) above as shown in Table 3, each had a reduced appearance defect rate and impurity amount increase rate. In comparison, the ceramic sintered compact according to Example 5, which did not satisfy Expression (6) above (50 mass%) as shown in Table 3, had an appearance defect rate and an impurity amount increase rate that were slightly lower than those of Examples 1 to 4. Using both the reused powders Pc and Ps for the second mixture makes it possible to improve the usage efficiency of the ceramic powder.

It has also been found that using the second slurry including both the reused powders Pc and Ps makes it possible to reduce a decrease in yield. Even in a case where two or more types of sintering aids are added as in a silicon nitride sintered compact, it is possible to reduce a decrease in yield. It should be noted that in a case where the second mixture is mixed with no non-reused powder P as in the flowchart illustrated in FIG. 1, it has been confirmed that the appearance defect rate and impurity amount increase rate are sufficiently low, although being higher than those of Examples 1 to 5.

In contrast, the ceramic sintered compact according to Comparative Example 3 and the ceramic sintered compact according to Comparative Example 4, in each of which the second mixture added with only one of the reused powders Pc and Ps is used, each had a lowered appearance defect rate. It has been found that reusing only one of the reused powders Pc and Ps results in a decrease in yield of the ceramic sintered compact.

The ceramic sintered compacts according to Examples 1 to 5 in a spherical shape polished into bearing balls were usable as bearing balls.

Reusing the ceramic powder under the certain conditions as described above makes it possible to sufficiently reduce the appearance defect rate and impurity amount increase rate of the ceramic sintered compact and improve the usage efficiency of the ceramic powder.

(Example 6 to 12, Reference Example 1)

The ceramic powders used in, out of Examples 1 to 5, Examples 1 to 4 were reused for N times ($N \geq 20$). The appearance defect rate and impurity amount increase rate of a ceramic sintered compact produced through the last N-th step were measured, the ceramic sintered compact being obtained by sintering the second ceramic granulated powder for an n-th reuse. The measurement method is as described above. Table 5 shows the results.

[Table 5]

|  | Reuse Step | The Number of Times of Reuse N | Appearance Defect Rate [%] | Evaluation of Impurity Amount Increase Rate |
|---|---|---|---|---|
| Example 6 | Example 1 | 20 | 2.8 | A |
| Example 7 | Example 1 | 50 | 3.0 | A |
| Example 8 | Example 2 | 30 | 2.7 | A |
| Example 9 | Example 2 | 50 | 2.9 | A |
| Example 10 | Example 3 | 50 | 2.5 | A |
| Example 11 | Example 3 | 150 | 2.7 | B |
| Example 12 | Example 4 | 30 | 2.7 | A |
| Reference Example 1 | Example 1 | 200 | 4.1 | C |

As can be seen from Table 5, it was possible to reduce the appearance defect rates and impurity amount increase rates irrespective of an increase in the number of times of reuse in Examples 6 to 12. An increase in the number of times of reuse makes it possible to further improve the usage efficiency of the ceramic powder. The ceramic sintered compacts according to Examples 6 to 12 in a spherical shape polished into bearing balls were usable as bearing balls.

In contrast, in a case where the number of times of reuse reached 200 (N = 200) as in Reference Example 1, the appearance defect rate and the impurity amount increase rate declined. Accordingly, an extremely large number of times of reuse is not favorable and the number of times of reuse is preferably 150 (N = 150) or less. It should be noted that in a case where no non-reused powder P is mixed in the second mixture as in the flowchart illustrated in FIG. 1, it has been demonstrated that the several times of reuse provide sufficiently low appearance defect rate and impurity amount increase rate.

Reusing the ceramic powder under the certain conditions for 150 times or more as described above makes it possible to sufficiently reduce the appearance defect rate and impurity amount increase rate of the ceramic sintered compact and improve the usage efficiency of the ceramic powder.

While certain embodiments have been described, these embodiments have been presented by way of example only, and are not intended to limit the scope of the inventions. Indeed, the novel methods and systems described herein may be embodied in a variety of other forms; furthermore, various omissions, substitutions and changes in the form of the methods and systems described herein may be made without departing from the spirit of the inventions. The accompanying claims and their equivalents are intended to cover such forms or modifications as would fall within the scope and spirit of the inventions.

**Claims**

1. A method of manufacturing ceramic granulated powder, the method comprising:

   a first slurry preparing step of preparing a first slurry including a first mixture including, as a non-reused powder, at least a non-reused ceramic powder and a sintering aid powder;
   a first granulating step of producing a first ceramic granulated powder including the first mixture by granulating the first slurry using a spray dryer;
   a cyclone collecting step of obtaining a cyclone reused powder using a cyclone collector in a middle of or after the first granulating step;
   a spray-dry collecting step of obtaining a spray-dried reused powder from the spray dryer after the first granulating step;
   a second slurry preparing step of preparing a second slurry including a second mixture including at least a mixture of the cyclone reused powder and the spray-dried reused powder; and
   a second granulating step of producing a second ceramic granulated powder including the second mixture by granulating the second slurry using the spray dryer, wherein
   an average particle diameter of the cyclone reused powder is smaller than an average particle diameter of the ceramic granulated powder and smaller than an average particle diameter of the spray-dried reused powder.

2. The method of manufacturing ceramic granulated powder according to claim 1, wherein in the second slurry preparing step, at least the cyclone reused powder and the spray-dried reused powder are mixed using a ball mill or a bead mill.

3. The method of manufacturing ceramic granulated powder according to claim 1 or 2, wherein in the second slurry preparing step, a solvent is added to prepare the second slurry.

4. The method of manufacturing ceramic granulated powder according to claim 1 or 2, wherein in at least one of the first granulating step and the second granulating step, a solvent is collected.

5. The method of manufacturing ceramic granulated powder according to claim 3, wherein in at least one of the first granulating step and the second granulating step, a solvent is collected.

6. The method of manufacturing ceramic granulated powder according to claim 1 or 2, wherein a gas inside the spray dryer is an inert gas.

7. The method of manufacturing ceramic granulated powder according to claim 5, wherein a gas inside the spray dryer is an inert gas.

8. The method of manufacturing ceramic granulated powder according to claim 1 or 2, the non-reused ceramic powder is a silicon nitride powder.

9. The method of manufacturing ceramic granulated powder according to claim 5, the non-reused ceramic powder is a silicon nitride powder.

10. The method of manufacturing ceramic granulated powder according to claim 6, the non-reused ceramic powder is a silicon nitride powder.

11. The method of manufacturing ceramic granulated powder according to claim 1, wherein the second mixture in the second slurry preparing step is a mixture of the cyclone reused powder and the spray-dried reused powder without addition of the non-reused powder.

12. The method of manufacturing ceramic granulated powder according to claim 1, wherein the second mixture in the second slurry preparing step includes the non-reused powder added to the cyclone reused powder and the spray-dried reused powder.

13. The method of manufacturing ceramic granulated powder according to claim 1, wherein

in the cyclone collecting step, the cyclone reused powder is obtained using the cyclone collector in a middle of or after the second granulating step, and
in the spray-dry collecting step, the spray-dried reused powder is obtained from the spray dryer after the second granulating step.

14. A method of manufacturing a ceramic sintered compact comprising the first slurry preparing step, the first granulating step, the cyclone collecting step, the spray-dry collecting step, the second slurry preparing step, and the second granulating step, the steps being comprised in the method according to claim 1, the method further comprising:

a molding step of producing a green compact using the second ceramic granulated powder obtained in the second granulating step;
a debinding step of producing a debound body by debinding the green compact; and
a sintering step of producing the ceramic sintered compact by sintering the debound body.

15. A method of manufacturing a ceramic sintered compact comprising the first slurry preparing step, the first granulating step, the cyclone collecting step, the spray-dry collecting step, the second slurry preparing step, and the second granulating step, the steps being comprised in the method according to claim 8, the method further comprising:

a molding step of producing a green compact using the second ceramic granulated powder obtained in the second granulating step;
a debinding step of producing a debound body by debinding the green compact; and
a sintering step of producing the ceramic sintered compact by sintering the debound body.

16. A method of manufacturing a ceramic sintered compact comprising the first slurry preparing step, the first granulating step, the cyclone collecting step, the spray-dry collecting step, the second slurry preparing step, and the second granulating step, the steps being comprised in the method according to claim 9, the method further comprising:

a molding step of producing a green compact using the second ceramic granulated powder obtained in the second granulating step;
a debinding step of producing a debound body by debinding the green compact; and
a sintering step of producing the ceramic sintered compact by sintering the debound body.

17. A method of manufacturing a ceramic sintered compact comprising the first slurry preparing step, the first granulating step, the cyclone collecting step, the spray-dry collecting step, the second slurry preparing step, and the second granulating step, the steps being comprised in the method according to claim 10, the method further comprising:

a molding step of producing a green compact using the second ceramic granulated powder obtained in the second granulating step;
a debinding step of producing a debound body by debinding the green compact; and
a sintering step of producing the ceramic sintered compact by sintering the debound body.

18. The method of manufacturing a ceramic sintered compact according to claim 15, wherein the ceramic sintered compact is a material for a bearing ball.

19. The method of manufacturing a ceramic sintered compact according to claim 16, wherein the ceramic sintered compact is a material for a bearing ball.

20. The method of manufacturing a ceramic sintered compact according to claim 17, wherein the ceramic sintered compact is a material for a bearing ball.

START

BINDING AGENT
+ SOLVENT

NON-REUSED
POWDER P

ST1

FIRST SLURRY
PREPARING STEP
(FIRST MIXTURE)

FIRST SLURRY

ST2

FIRST GRANULATING
STEP

FIRST CERAMIC
GRANULATED POWDER

ST3

n-TH CYCLONE
COLLECTING STEP

CYCLONE REUSED
POWDER Pc

ST4

n-TH SPRAY-DRY
COLLECTING STEP

SPRAY-DRIED REUSED
POWDER Ps

BINDING AGENT + SOLVENT

ST5

n-TH SECOND SLURRY
PREPARING STEP
(SECOND MIXTURE)

n-TH SECOND SLURRY

ST6

n-TH SECOND
GRANULATING STEP

n-TH SECOND CERAMIC
GRANULATED POWDER

ST7

n=N?    NO

YES

END

FIG. 1

START

BINDING AGENT
+ SOLVENT

NON-REUSED
POWDER P

ST11

FIRST SLURRY
PREPARING STEP
(FIRST MIXTURE)

FIRST SLURRY

ST12

FIRST GRANULATING
STEP

FIRST CERAMIC
GRANULATED POWDER

ST13

n-TH CYCLONE
COLLECTING STEP

CYCLONE REUSED
POWDER Pc

ST14

n-TH SPRAY-DRY
COLLECTING STEP

SPRAY-DRIED REUSED
POWDER Ps

BINDING AGENT
+ SOLVENT

NON-REUSED
POWDER P

ST15

n-TH SECOND SLURRY
PREPARING STEP
(SECOND MIXTURE)

n-TH SECOND SLURRY

ST16

n-TH SECOND
GRANULATING STEP

n-TH SECOND CERAMIC
GRANULATED POWDER

ST17

n=N?

NO

YES

END

FIG. 2

FIG. 3

8

GAS

GAS
(FROM SPRAY DRYER 1)

CYCLONE REUSED POWDER Pc

# FIG. 4

## INTERNATIONAL SEARCH REPORT

| International application No. |
|---|
| **PCT/JP2024/032150** |

**A. CLASSIFICATION OF SUBJECT MATTER**

*C04B 35/626*(2006.01)i; *B01J 2/04*(2006.01)i; *C04B 35/587*(2006.01)i; *F16C 33/32*(2006.01)i
FI: C04B35/626 950; B01J2/04; C04B35/587; C04B35/626 250; C04B35/626 550; F16C33/32

According to International Patent Classification (IPC) or to both national classification and IPC

**B. FIELDS SEARCHED**

Minimum documentation searched (classification system followed by classification symbols)

C04B35/00 - 35/84; B01J2/04; F16C33/32

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | WO 2020/004304 A1 (TOKUYAMA CORPORATION) 02 January 2020 (2020-01-02) paragraphs [0007], [0009], [0012], [0015]-[0016], [0020], [0025], [0032] | 1-20 |
| Y | 島井 駿蔵, ⅠⅠⅠ編 造粒の応用　11・3・3　造粒粉としての評価, 造粒ハンド ブック, オーム社 佐藤 政次, 10 March 1991, pp. 738-739, ISBN:978-4-274-11980-4, non-official translation (SHIMAI, Shunzo, Part III Application of Granulation: 11.3.3 Evaluation as granulated powder, Zoryu Handbook, OHMUSHA, LTD. SATO, Masatsugu) p. 738, fig. 11.7 | 1-20 |
| Y | 佐藤 宏, ⅠⅠⅠ編 造粒の応用　9・5・2　スプレードライヤーによる造粒, 造粒ハ ンドブック, オーム社 佐藤 政次, 10 March 1991, pp. 696-698, ISBN:978-4-274-11980-4, non-official translation (SATO, Hiroshi, Part III Application of Granulation: 9.5.2 Granulation using a spray dryer, Zoryu Handbook, OHMUSHA, LTD. SATO, Masatsugu) p. 698, fig. 9.13 | 1-20 |

✓ Further documents are listed in the continuation of Box C.    ✓ See patent family annex.

| | |
|---|---|
| \* Special categories of cited documents: | "T" later document published after the international filing date or priority date and not in conflict with the application but cited to understand the principle or theory underlying the invention |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **14 November 2024** | **26 November 2024** |

| Name and mailing address of the ISA/JP | Authorized officer |
|---|---|
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

**EP 4 778 906 A1**

**INTERNATIONAL SEARCH REPORT**

| International application No. |
| --- |
| **PCT/JP2024/032150** |

| C. | DOCUMENTS CONSIDERED TO BE RELEVANT | | |
| --- | --- | --- |
| Category* | Citation of document, with indication, where appropriate, of the relevant passages | Relevant to claim No. |
| Y | 中村 昌允, ⅠⅠ編 造粒の技術　6・5・6　その他, 造粒ハンドブック, オーム社 佐藤 政次, 10 March 1991, pp. 266-269, ISBN:978-4-274-11980-4, non-official translation (NAKAMURA, Masayoshi, Part II Application of Granulation: 6.5.6 Other, Zoryu Handbook, OHMUSHA, LTD. SATO, Masatsugu) p. 266, fig. 6.47 | 4-7, 9-10, 16-17, 19-20 |
| A | JP 63-101519 A (KABUSHIKI KAISHA TOSHIBA) 06 May 1988 (1988-05-06) entire text | 1-20 |
| A | JP 1-261277 A (TOSHIBA CERAMICS CO., LTD.) 18 October 1989 (1989-10-18) entire text | 1-20 |
| A | WO 2023/071897 A1 (SINOMA ADVANCED NITRIDE CERAMICS CO., LTD.) 04 May 2023 (2023-05-04) entire text | 1-20 |
| A | CN 205473405 U (JIANGSU JINSHENG FINE CERAMIC SCIENCE AND TECHNOLOGY CO., LTD.) 17 August 2016 (2016-08-17) entire text | 1-20 |

Form PCT/ISA/210 (second sheet) (July 2022)

# EP 4 778 906 A1

## INTERNATIONAL SEARCH REPORT
### Information on patent family members

| Patent document cited in search report | | | Publication date (day/month/year) | Patent family member(s) | | | Publication date (day/month/year) |
|---|---|---|---|---|---|---|---|
| WO | 2020/004304 | A1 | 02 January 2020 | US 2021/0221745 A1 paragraphs [0009]-[0012], [0014], [0020], [0023], [0026], [0036], [0047], [0058] | | | |
| | | | | EP 3816138 A1 | | | |
| | | | | CN 112368251 A | | | |
| | | | | KR 10-2021-0022588 A | | | |
| | | | | TW 202010725 A | | | |
| | | | | JP 2020-001968 A | | | |
| JP | 63-101519 | A | 06 May 1988 | (Family: none) | | | |
| JP | 1-261277 | A | 18 October 1989 | (Family: none) | | | |
| WO | 2023/071897 | A1 | 04 May 2023 | JP 2024-512903 A | | | |
| | | | | CN 113800919 A | | | |
| CN | 205473405 | U | 17 August 2016 | (Family: none) | | | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5944910 B

- JP 2020001968 A